# FASCICULE DE BREVET EUROPEEN

(11) **EP 2 925 470 B1**
(45) Date de publication et mention de la délivrance du brevet: **29.12.2021**
(21) Numéro de dépôt: 13808115.3
(22) Date de dépôt: 27.11.2013
(51) Int. Cl.: B22F 1/00, B22F 10/28, B22F 10/34, B22F 10/37, B22F 10/38, B29C 64/153, B33Y 10/00, C22C 19/05, B33Y 40/10, B33Y 70/00, B22F 12/13, B22F 12/53

(54) **PROCÉDÉ DE FABRICATION ADDITIVE D'UNE PIÈCE PAR FUSION SÉLECTIVE OU FRITTAGE SÉLECTIF DE LITS DE POUDRE À COMPACITÉ OPTIMISÉE PAR FAISCEAU DE HAUTE ÉNERGIE**
VERFAHREN ZUR ADDITIVEN HERSTELLUNG EINES BAUTEILS DURCH SELEKTIVES SCHMELZEN ODER SELEKTIVES SINTERN VON PULVERBETTEN MIT OPTIMIERTER KOMPAKTHEIT MITTELS EINES HOCHENERGIESTRAHLS
A METHOD FOR THE ADDITIVE MANUFACTURING OF A PART BY SELECTIVE MELTING OR SELECTIVE SINTERING OF OPTIMISED-COMPACTNESS POWDER BEDS USING A HIGH ENERGY BEAM

(30) Priorité: 27.11.2012 FR 1203196
(43) Date de publication de la demande: 07.10.2015
(73) Titulaire: Safran Aircraft Engines, 75015 Paris (FR); MBDA France, 92350 Le Plessis-Robinson (FR)
(72) Inventeur: COLIN, Christophe, F-91000 Evry (FR); MOTTIN, Jean-Baptiste, F-86000 Poitiers (FR); KIRSCHNER, Laëtitia, F-75020 Paris (FR); SAUSSEREAU, Gérard, F-78320 Le Mesnil Saint Denis (FR)
(74) Mandataire: Cabinet Beau de Loménie
(86) Numéro de dépôt international: PCT/FR2013/052867
(87) Numéro de publication internationale: WO 2014/083277

(56) Documents cités:
- US-A- 5 038 014
- US-A1- 2002 176 793
- US-A1- 2006 083 652
- US-A1- 2009 206 522
- US-A1- 2010 291 401
- US-A1- 2012 237 745
- US-B1- 6 243 616
- M. LI ET AL: "Comparison of Particle Size Distributions Measured Using Different Techniques", PARTICULATE SCIENCE AND TECHNOLOGY, vol. 23, no. 3, 24 February 2007 (2007-02-24), pages 265-284, XP055269915, US ISSN: 0272-6351, DOI: 10.1080/02726350590955912
- Bochuan Liu ET AL: "INVESTIGATION THE EFFECT OF PARTICLE SIZE DISTRIBUTION ON PROCESSING PARAMETERS OPTIMIZATION IN SELECTIVE LASER MELTING PROCESS", , 31 January 2011 (2011-01-31), XP055664077, Retrieved from the Internet: URL:https://www.researchgate.net/profile/C hristopher_Tuck/publication/268365007_Inve stigaztion_the_effect_of_particle_size_dis tribution_on_processing_parameters_optimis ation_in_selective_laser_melting_process/l inks/54b8ee3d0cf269d8cbf722c9/Investigazti on-the-effect-of-particle-size-distributio n-on-proce [retrieved on 2020-01-31]

## Description

La présente invention concerne le domaine de la fabrication de pièces par fusion sélective ou frittage sélectif de lits de poudre par faisceau de haute énergie (faisceau laser, faisceau d'électrons,...).

En particulier, la présente invention concerne la fabrication de pièces métalliques, intermétalliques, céramiques, ou polymères.

L'invention concerne plus particulièrement un procédé de fabrication d'une pièce par fusion sélective de lits de poudre par faisceau de haute énergie qui comprend les étapes suivantes :
(a) On fournit un matériau sous forme de particules de poudre,
(b) On dépose une première couche de poudre dudit matériau sur un support de construction (il peut s'agir d'un support massif, d'une partie d'une autre pièce ou d'une grille support utilisée pour faciliter la construction de certaines pièces),
(c) On balaye au moins une région de ladite première couche avec ce faisceau de façon à chauffer localement la poudre de cette région à une température supérieure à la température de frittage de cette poudre, de telle sorte que les particules de ladite poudre ainsi frittée ou fondue forment alors au moins un premier élément d'un seul tenant,
(d) On dépose une deuxième couche de poudre dudit matériau sur cette première couche de poudre,
(e) On balaye au moins une région de la deuxième couche par le faisceau de façon à chauffer la poudre de cette région à une température supérieure à la température de frittage de cette poudre, de telle sorte que les particules de la poudre ainsi frittée ou fondue forment au moins un deuxième élément d'un seul tenant (en général cette région de la deuxième couche est située partiellement ou complètement au dessus de la région de la première couche balayée par le faisceau à l'étape (c), de telle sorte que les particules de poudre fondues ou frittées à l'étape (c) et à l'étape (e) forment un ensemble d'un seul tenant ; cependant dans certains cas, notamment pour la fabrication de parties de pièce en contre-dépouille, la région de la deuxième couche n'est pas située au dessus de la région de la première couche balayée par le faisceau à l'étape (c) et les particules de poudre fondues ou frittées à l'étape (c) et à l'étape (e) ne forment alors pas un ensemble d'un seul tenant), (f) On répète les étapes (d) et (e) pour chaque nouvelle couche de poudre à déposer au dessus d'une couche précédente, dont au moins une région a déjà été préalablement fondue ou frittée, et ce jusqu'à la formation complète de la pièce.

L'invention vise en particulier la fabrication rapide de pièces par fusion sélective de lits de poudre par laser.

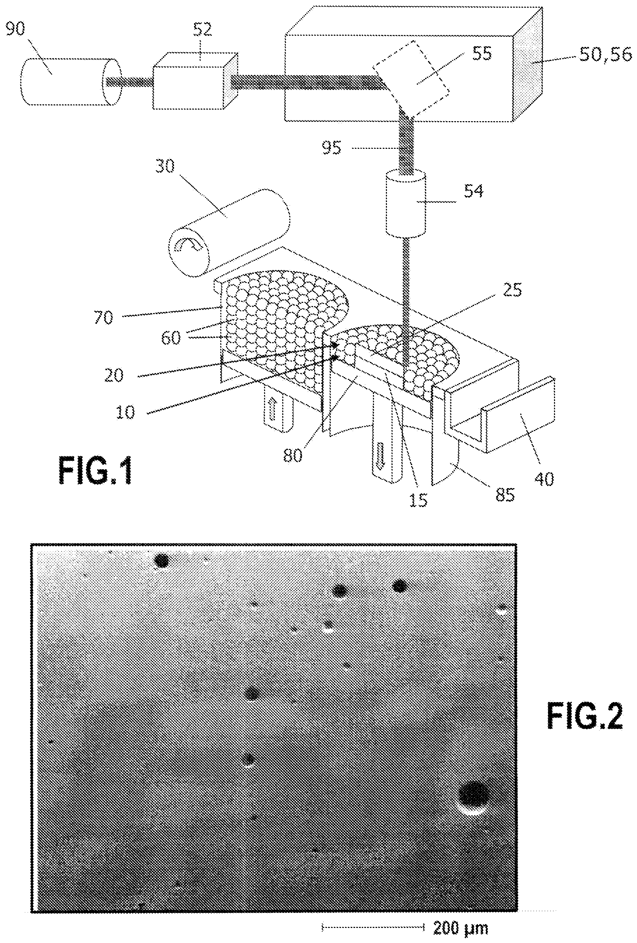

Par "fusion sélective par laser", en anglais *"Selective Laser Melting"* (SLM), on entend un procédé dont les caractéristiques principales sont rappelées ci-après, en référence à la figure 1.

On dépose, par exemple à l'aide d'un rouleau 30 (ou tout autre moyen de dépose), une première couche 10 de poudre d'un matériau sur un support de construction 80, cette poudre étant transvasée depuis un bac d'alimentation 70 lors d'un mouvement aller du rouleau 30 puis elle est raclée, et éventuellement légèrement compactée, lors d'un (ou de plusieurs) mouvement(s) de retour du rouleau 30. La poudre est composée de particules 60. L'excédent de poudre est récupéré dans un bac de recyclage 40 situé de façon adjacente au bac de construction 85 dans lequel se déplace verticalement le support de construction 80.

Puis on porte une région de cette première couche 10 de poudre, par balayage avec un faisceau laser 95, à une température supérieure à la température de fusion T_{F} de cette poudre (température de liquidus).

Le procédé SLM peut utiliser n'importe quel faisceau de haute énergie à la place du faisceau laser 95, tant que ce faisceau est suffisamment énergétique pour fondre les particules de poudre et une partie du matériau sur lequel les particules reposent (encore appelée zone diluée faisant partie intégrante du bain liquide).

Ce balayage du faisceau est effectué par exemple par une tête galvanométrique faisant partie d'un système de pilotage 50. Par exemple ce système de pilotage comprend à titre non limitatif au moins un miroir 55 orientable sur lequel le faisceau laser 95 se réfléchit avant d'atteindre une couche de poudre dont chaque point de la surface se trouve située toujours à la même hauteur par rapport à la lentille de focalisation contenue dans le système de focalisation 54, la position angulaire de ce miroir étant pilotée par une tête galvanométrique pour que le faisceau laser balaye au moins une région de la première couche de poudre, et suive ainsi un profil de pièce préétabli. Pour ce faire, la tête galvanométrique est commandée selon les informations contenues dans la base de données de l'outil informatique utilisé pour la conception et la fabrication assistées par ordinateur de la pièce à fabriquer.

Ainsi, les particules de poudre 60 de cette région de la première couche 10 sont fondues et forment un premier élément 15 d'un seul tenant, solidaire avec le support de construction 80. A ce stade, on peut également balayer avec le faisceau laser plusieurs régions indépendantes de cette première couche pour former, après fusion et solidification de la matière, plusieurs premiers éléments 15 disjoints les uns des autres.

On abaisse le support 80 d'une hauteur correspondant à celle déjà définie à la première couche (20 à 100 µm et en général de 30 à 50 µm). L'épaisseur de la couche de poudre à fusionner ou à consolider reste une valeur variable d'une couche à l'autre car elle est fort dépendante de la porosité du lit de poudre et de sa planéité alors que le déplacement pré-programmé du support 80 est une valeur invariable au jeu près. Rappelons que l'épaisseur de la couche à fusionner ou à consolider est bien souvent supérieure au déplacement du support 80 d'environ 50% sauf à la première couche si la surface du support 80 est parfaitement parallèle à l'axe du rouleau 30.

On dépose ensuite une deuxième couche 20 de poudre sur la première couche 10 et sur ce premier élément d'un seul tenant ou consolidé 15, puis on chauffe par exposition au faisceau laser 95 une région de la deuxième couche 20 qui est située partiellement ou complètement au dessus de ce premier élément d'un seul tenant ou consolidé 15 dans le cas illustré à la figure 1, de telle sorte que les particules de poudre de cette région de la deuxième couche 20 sont fondues, avec au moins une partie du premier élément 15, et forment un deuxième élément d'un seul tenant ou consolidé 25, l'ensemble de ces deux éléments 15 et 25 formant, dans le cas illustré à la figure 1, un bloc d'un seul tenant. A cet effet, le deuxième élément 25 est avantageusement déjà entièrement lié dès qu'une partie de ce deuxième élément 25 se lie au premier élément 15.

On comprend que selon le profil de la pièce à construire, et notamment dans le cas de surface en contre-dépouille, il se peut que la région précitée de la première couche 10 ne se trouve pas, même partiellement, en dessous de la région précitée de la deuxième couche 20, de sorte que dans ce cas le premier élément consolidé 15 et le deuxième élément consolidé 25 ne forment alors pas un bloc d'un seul tenant.

On poursuit ensuite ce processus de construction de la pièce couche par couche en ajoutant des couches supplémentaires de poudre sur l'ensemble déjà formé.

Le balayage avec le faisceau laser 95 permet de construire chaque couche en lui donnant une forme en accord avec la géométrie de la pièce à réaliser. Les couches inférieures de la pièce se refroidissent plus ou moins vite au fur et à mesure que les couches supérieures de la pièce se construisent.

L'invention vise également la fabrication rapide de pièces sans fusion, à savoir par frittage sélectif de lits de poudre par laser. Par « frittage sélectif par laser », en anglais « *Selective Laser Sintering »* (SLS), on entend un procédé proche du SLM à la différence que dans le cas du SLS, on porte la poudre à une température inférieure à la température de fusion T_{F} de cette poudre (température de liquidus), soit cette température est supérieure à la température de solidus mais inférieure au liquidus et il s'agit d'un frittage en phase liquide, avec fusion partielle de la matière (matière à l'état pâteux avec coexistence des phase solide et liquide), soit cette température est inférieure à la température de solidus mais supérieure à 0.5 T_{F} et il s'agit de frittage en phase solide (toute la matière est solide et le frittage s'opère essentiellement par diffusion en phase solide). Le document US 2009/206522 décrit un procédé de SLS dans lequel les particules de poudre sont préchauffées avant leur dépôt.

Afin de diminuer la contamination de la pièce, par exemple en oxygène dissous, en oxyde(s) ou en un autre polluant lors de sa fabrication couche par couche telle que décrite ci-dessus, cette fabrication doit être effectuée dans une enceinte à degré d'hygrométrie contrôlée et adaptée au couple procédé/matériau, remplie d'un gaz neutre (non réactif) vis-à-vis du matériau considéré tel que l'azote (N₂), l'argon (Ar) ou l'hélium (He) avec ou non addition d'une faible quantité d'hydrogène (H₂) connu pour son pouvoir réducteur. Un mélange d'au moins deux de ces gaz peut être aussi considéré. Pour empêcher la contamination, notamment par l'oxygène du milieu environnant, il est d'usage de mettre cette enceinte en surpression.

Ainsi selon l'état de l'art actuel, la fusion sélective ou le frittage sélectif par laser permet de construire avec une bonne précision dimensionnelle des pièces faiblement polluées dont la géométrie en trois dimensions peut être complexe mais dont la tenue mécanique est encore insuffisante pour certaines applications et donc nécessite une meilleure optimisation du procédé.

La fusion sélective ou le frittage sélectif par laser utilise en outre de préférence des poudres de morphologie sphérique, propres (i.e non contaminées par des éléments résiduels provenant de la synthèse), très fines (la dimension de chaque particule est comprise entre 1 et 100 µm et de préférence entre 1 et 50 µm voire entre 1 et 20 µm), ce qui permet d'obtenir un excellent état de surface de la pièce finie.

La fusion sélective ou le frittage sélectif par laser permet par ailleurs une diminution des délais de fabrication, des coûts et des frais fixes, par rapport à une pièce moulée, injectée, corroyée ou usinée dans la masse.

Les pièces élaborées par fusion sélective ou le frittage sélectif par laser présentent cependant des inconvénients.

Il se produit une contamination encore trop importante de la pièce en oxygène ou tout autre polluant, même dans le cas où l'on cherche à remplir totalement l'enceinte de fabrication (comprenant le bac de construction 85, le bac d'alimentation 70 et le rouleau 30 ou autre moyen de dépose) avec un gaz neutre (non réactif) pour le matériau considéré. En effet, il est difficile d'évacuer tout l'oxygène de l'enceinte et par ailleurs les gaz utilisés ne sont jamais purs à 100%. Cette contamination induit une fragilisation et/ou un durcissement et/ou une oxydation du matériau composant la pièce, ce qui se traduit par une diminution de la ductilité de la pièce et sa rupture prématurée.

De plus, il peut se former dans la pièce des porosités de gaz occlus provenant d'une part de la différence de solubilité pour le gaz neutre entre le matériau (de la poudre) en phase liquide et le matériau en phase solide, et ce d'autant plus que le bain est riche en inclusions jouant le rôle de germes pour la formation de porosités de gazage, que l'intervalle de solidification de l'alliage est grand, que la température du bain et le temps de solidification sont importantes, que la vitesse de solidification du bain liquide est importante, et d'autre part du fait que les particules de poudre peuvent préalablement contenir du gaz occlus. Ces porosités fermées de forme sphérique contribuent à diminuer les propriétés mécaniques de la pièce.

La figure 2 montre les porosités sphériques indésirables qui se forment au sein du matériau brut de fabrication (dans le cas présent de l'Inconel 718) lorsqu'on utilise le procédé selon l'art antérieur de fusion sélective par laser (cette image est obtenue par observation du matériau au microscope électronique à balayage en électrons secondaires après polissage du matériau).

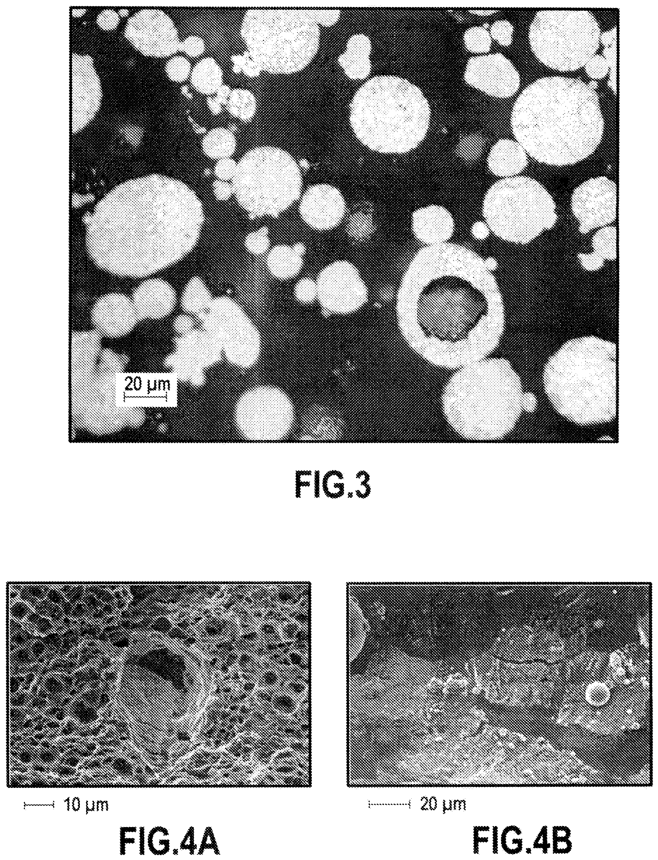

La figure 3 montre des porosités de gaz occlus formées en amont, au sein des particules de poudre, par exemple lorsque ces particules sont obtenues par atomisation au gaz (cette image est obtenue par observation de la poudre au microscope optique après polissage et attaque chimique).

Lorsqu'on utilise selon l'art antérieur le procédé de fusion sélective par laser, un film d'oxyde(s) peut en outre se former à l'intérieur de ces porosités, comme l'illustrent les deux vues micrographiques des figures 4A et 4B montrant la surface obtenue après rupture d'un alliage AlSi10Mg.

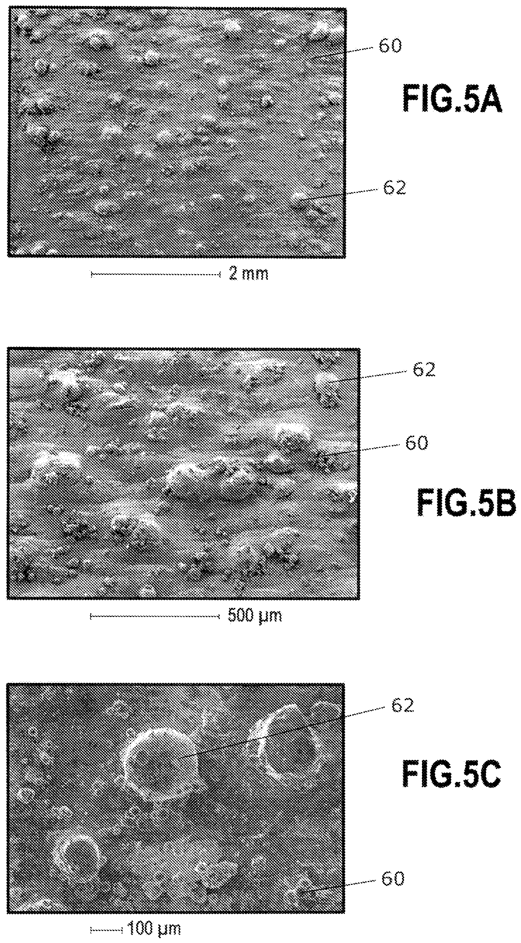

Par ailleurs, la présence d'interstices remplis de gaz entre les particules de poudre favorise lors de la fusion sélective du lit de poudre des éjections de matière sous le faisceau laser, ce qui est gênant pour la mise en couche et le recyclage de la poudre. En effet, ces éjections de matière prennent bien souvent la forme de grosses billes (bien plus grosses que des particules de poudre voire même plus grosses que l'épaisseur du lit de poudre) qui viennent se souder à la surface du matériau fondu, entravant ainsi la mise en couche suivante, à l'origine de défauts de fabrication. On peut visualiser, sur les figures 5A, 5B et 5C, ces billes 62 présentes à la surface d'une couche qui vient d'être fabriquée. Ces billes 62 présentent un diamètre de plus de 200 µm, soit environ une taille 10 fois plus grande que les particules de poudre 60 non fondues dont certaines d'entre elles restent également présentes à la surface d'une couche qui vient d'être fabriquée comme on le voit sur les figures 5A, 5B et 5C.

Parfois même, ces grosses billes peuvent atterrir, soit dans le lit de poudre d'une région non encore fondue, soit dans le bac de recyclage, obligeant le fabricant à un tamisage de la poudre récupérée, de façon à éliminer ces grosses billes pour les fabrications ultérieures.

Dans le cas de la mise en œuvre d'un frittage sélectif de lits de poudre par faisceau de haute énergie, les problèmes présentés ci-dessus peuvent se rencontrer, au moins en partie, lorsqu'il s'agit d'un frittage en phase liquide, avec fusion partielle de la matière. Par ailleurs, dans ce cas et dans le cas d'un frittage en phase solide, l'obtention d'une pièce la plus compacte possible, à savoir obtenue par une densification de la matière efficace, requiert des conditions favorables à la diffusion de la matière, et notamment un maintien à une température supérieure à la température minimale de frittage pendant un temps relativement long.

La présente invention a pour objectif de fournir un procédé de fabrication d'une pièce par fusion sélective ou frittage sélectif de lits de poudre par faisceau de haute énergie permettant de surmonter les inconvénients de l'art antérieur.

Ce but est atteint grâce au fait que la poudre comporte une répartition granulométrique multimodale.

En effet, selon l'invention, la poudre utilisée ne présente pas une répartition granulométrique monomodale, telle qu'une répartition granulométrique d'une poudre classique, qui est généralement de type Gaussienne (Rappelons toutefois que la compacité d'un empilement de particules de poudre s'accroît quand la distribution de type Gaussienne des tailles des particules s'élargit).

Grâce à l'invention, on accroît le nombre de coordination (ou coordinence) et la compacité (ou densité relative) du lit de poudre dont la porosité est alors diminuée de façon optimale, et ce avant fusion ou frittage et solidification de la matière.

Ainsi, on peut réaliser un lit de poudre beaucoup plus compact avant fusion ou frittage.

Il en résulte une présence moindre d'interstices entre les particules avant leur fusion, et ainsi d'un volume gazeux susceptible d'être emprisonné lors de la fusion ou du frittage de particules de poudre sous faisceau laser.

De ce fait, il s'ensuit d'une part une réduction du phénomène d'emprisonnement de gaz au sein du matériau fusionné ou fritté et d'autre part une diminution du phénomène d'éjection de matière sous le faisceau laser et en conséquence une réduction des défauts de fabrication (autres que des porosités de gaz occlus), ce qui accroît la qualité métallurgique, la qualité dimensionnelle et la tenue mécanique de la pièce.

La solution selon l'invention permet donc d'abaisser très significativement le nombre de pores et de défauts de construction ainsi que leur taille dans la pièce obtenue par fusion sélective ou frittage sélectif de lits de poudre par faisceau de haute énergie, et donc contribue grandement à améliorer les propriétés mécaniques de ladite pièce.

Par ailleurs, la productivité du procédé est accrue en raison d'une meilleure compacité du lit de poudre, toute chose égale par ailleurs. En effet, on a moins de retrait de la matière après consolidation. Qui plus est, du fait de la réduction des éjections de matière sous le faisceau de haute énergie, il n'est plus nécessaire de limiter autant la vitesse de balayage du faisceau de haute énergie.

Egalement, et en particulier pour un frittage sélectif de lits de poudre, qu'il soit en phase liquide, mais surtout lorsqu'il s'agit de frittage en phase solide, la meilleure compacité du lit de poudre permet d'obtenir une pièce plus compacte dans un temps plus court.

Selon la présente invention, entre les étapes (a) et (b), on préchauffe en continu ladite poudre du bac d'alimentation 70 à une température de préchauffage T_{P} comprise entre 80°C et 150°C et on fait circuler, de préférence de manière ascendante, un gaz neutre dans ladite poudre (comparable à un lit fluidisé) de façon à diminuer l'humidité de l'air adsorbée à la surface des particules de poudre.

D'autres avantages et caractéristiques de l'invention ressortiront à la lecture de la description suivante faite à titre d'exemple et en référence aux dessins annexés dans lesquels :
- la figure 1 est un schéma explicatif du procédé selon l'art antérieur, illustrant le dispositif utilisé,
- la figure 2 illustre les porosités sphériques qui se forment au sein du matériau brut de fabrication lorsqu'on utilise le procédé selon l'art antérieur,
- La figure 3 illustre les porosités de gaz occlus qui se forment au sein de particules de poudre obtenues par atomisation au gaz,
- Les figures 4A et 4B illustrent le film d'oxyde(s) qui se forme à l'intérieur de porosités au sein du matériau fusionné lorsqu'on utilise le procédé de fusion sélective par laser selon l'art antérieur,
- Les figures 5A, 5B et 5C, déjà décrites, illustrent à des échelles différentes, les billes formées par éjection de matière à la surface du matériau fondu et solidifié en comparaison avec les particules de poudre utilisées au départ,
- La figure 6 est une représentation schématique d'une distribution granulométrique monomodale d'une poudre avec sa courbe de fraction volumique cumulée associée, et
- Les figures 7 et 8 sont des représentations schématiques, d'une distribution granulométrique bimodale d'une poudre utilisable dans le cadre du procédé de fabrication selon l'invention, pour deux cas de figures différents.

Le dispositif selon l'invention comprend un bac d'alimentation 70 contenant de la poudre d'un matériau, un rouleau 30 pour transvaser cette poudre depuis ce bac 70 et étaler une première couche 10 de cette poudre sur un support de construction 80 (il peut s'agir d'un support massif, d'une partie d'une autre pièce ou d'une grille support utilisée pour faciliter la construction de certaines pièces).

Avantageusement le dispositif comprend également un bac de recyclage 40 pour récupérer une infime partie de la poudre usagée (en particulier non fondue ou non frittée) avec les quelques grosses billes éjectées de la couche précédente et la majeure partie de la poudre en excès, après étalement de la couche de poudre sur le support de construction 80. Ainsi, la majeure partie de la poudre du bac de recyclage est composée de poudre neuve. Aussi, ce bac de recyclage 40 est communément appelé par la profession bac de trop plein ou cendrier.

Ce dispositif comprend également un générateur 90 de faisceau laser 95, et un système de pilotage 50 apte à diriger ce faisceau 95 sur n'importe quelle région du support de construction 80 de façon à balayer n'importe quelle région d'une couche de poudre. La mise en forme du faisceau laser et la variation de son diamètre sur le plan focal se font respectivement au moyen d'un dilatateur de faisceau ou « *Beam Expander»* 52 et d'un système de focalisation 54, l'ensemble constituant le système optique.

Ce dispositif pour appliquer le procédé SLM ou SLS sur une poudre peut utiliser n'importe quel faisceau de haute énergie en place du faisceau laser 95, tant que ce faisceau est suffisamment énergétique pour dans le premier cas fondre ou dans l'autre cas former des cols ou ponts entre les particules de poudre et une partie du matériau sur lequel les particules reposent.

Le rouleau 30 peut être remplacé par un autre système de dépose approprié, tel qu'un dévidoir (ou trémie) associé à une lame de raclage, à un couteau ou à une brosse, apte à transvaser et étaler la poudre en couche.

Le système de pilotage 50 comprend par exemple à titre non limitatif au moins un miroir 55 orientable sur lequel le faisceau laser 95 se réfléchit avant d'atteindre une couche de poudre dont chaque point de la surface se trouve située toujours à la même hauteur par rapport à la lentille de focalisation, contenue dans le système de focalisation 54, la position angulaire de ce miroir 55 étant pilotée par une tête galvanométrique pour que le faisceau laser balaye au moins une région de la première couche de poudre, et suive ainsi un profil de pièce pré-établi.

De manière schématique, on utilise un générateur de faisceau 90, un système de réglage du diamètre du faisceau laser encore appelé dilatateur de faisceau ou « *Beam Expander»* 52, un système de balayage du faisceau laser encore appelé « scanner » 56 et un système de focalisation du faisceau laser 54. Le dilatateur de faisceau 52 est composé d'un ensemble de lentilles amovibles entre elles qui fait passer le diamètre (Φ) de la fibre optique au diamètre (D>Φ) du faisceau laser lequel arrive sur la lentille de focalisation. Le système de focalisation du faisceau laser de diamètre (D) est constitué d'une lentille de focalisation caractérisée par une distance focale (f) qui fait passer le diamètre (D) du faisceau laser au diamètre (d<D) sur le plan focal défini par la surface du support de construction 80 ou la surface du lit de poudre.

Selon l'invention, on utilise une poudre 60 formée de particules respectant une répartition granulométrique (distribution granulométrique) qui n'est pas monomodale, c'est-à-dire centrée sur une seule valeur de diamètre moyen, mais qui est multimodale, c'est-à-dire centrée sur plus d'une seule valeur de diamètre moyen à savoir sur plusieurs valeurs de diamètre moyen.

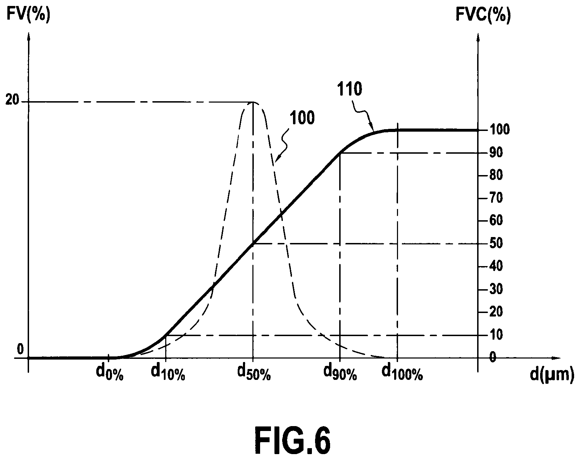

A titre de taille moyenne ou de diamètre moyen, on entend dans la présente demande de brevet, le diamètre médian d_{50%}, à savoir celui qui correspond au fait que 50% en volume cumulé ou en masse cumulée des particules de poudre présentant une taille inférieure à cette valeur de diamètre médian d_{50%} et 50% en volume cumulé ou en masse cumulée des particules de poudre présentant une taille supérieure à cette valeur de diamètre médian d_{50%}, comme il apparaît sur la figure 6 représentant schématiquement une courbe 100 de distribution granulométrique monomodale d'une poudre (taille de particules d, en micromètre), avec sa courbe de fraction volumique cumulée associée 110. Sont reportés sur cette courbe 100 de distribution granulométrique monomodale les diamètres d_{0%}, d_{10%}, d_{50%}, d_{90%} et d_{100%} qui seront utilisés dans la suite du texte.

Il est à noter que tout autre diamètre moyen d'une distribution de taille de particules donnée obtenu à partir de toute autre technique de caractérisation est utilisable dans le cadre de la présente invention.

Selon une disposition préférentielle et avantageusement la moins onéreuse, la poudre dudit matériau comporte une répartition granulométrique bimodale, c'est-à-dire comportant deux distributions élémentaires en tailles de particules de poudre, la répartition granulométrique de la poudre étant centrée autour de deux valeurs de diamètre moyen ou médian d_{50%}.

La répartition granulométrique bimodale de l'ensemble de la poudre est donc la somme de deux distributions granulométriques déconvoluées, chacune d'entre elles étant caractérisées par une taille moyenne et une étendue de taille définie par d_{90%} - d_{10%} voire de préférence par d_{100%} - d_{0%}. Rappelons que l'étendue d'une distribution granulométrique est le plus souvent quantifiée à l'aide du coefficient d'uniformité Cᵤ qui est défini pour une distribution volumique en taille par une largeur rapportée au diamètre médian, soit Cᵤ=( d_{90%} - d_{10%})/ d_{50%} connu dans la littérature anglaise par le terme « *Span ».*

Ces deux distributions élémentaires peuvent présenter un recouvrement plus ou moins important mais on préférera qu'il soit négligeable voire inexistant pour l'invention.

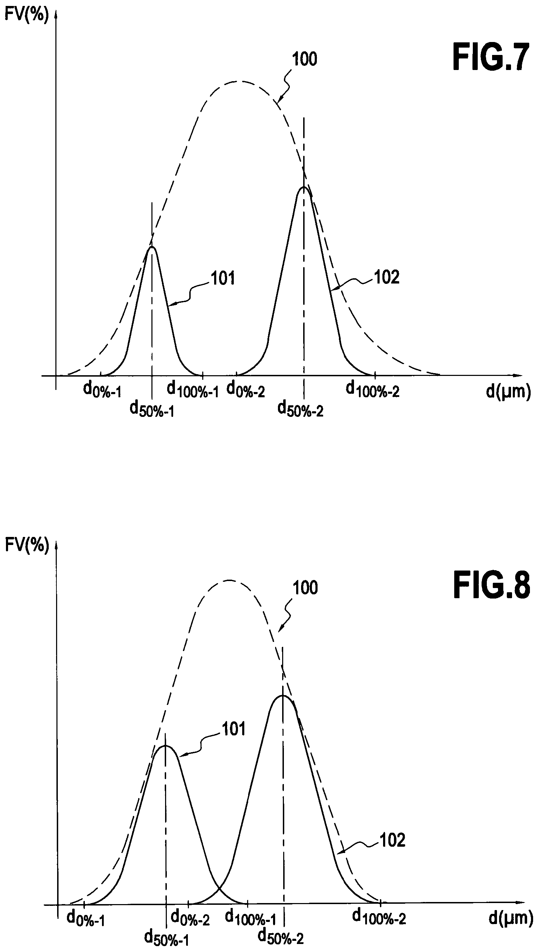

Les figures 7 et 8 sont des représentations schématiques pour deux cas de figures, d'une distribution granulométrique bimodale d'une poudre utilisable dans le cadre du procédé de fabrication selon l'invention : la courbe 101 correspondant à une première répartition granulométrique, après le tri sélectif (par exemple par élutriation), comprenant une première distribution de particules de petite taille centrée autour du diamètre médian d_{50%-1}, et la courbe 102 correspondant à une deuxième répartition granulométrique, après le tri sélectif (par exemple par tamisage), comprenant une deuxième distribution de particules de grande taille centrée autour du diamètre médian d_{50%-2}.

La figure 7 illustre le cas où il n'y a pas de recouvrement entre les deux courbes 101 et 102 : d_{0%-2} est supérieur à d_{100%-1}.

La figure 8 illustre le cas où il existe un recouvrement entre les deux courbes 101 et 102 : d_{0%-2} est inférieur à d_{100%-1}, d_{50%-1} est inférieur à d_{0%-2} et d_{100%-1} est inférieur à d_{50%-2}

Dans le cas où il existe un recouvrement important, un traitement de déconvolution de la répartition granulométrique de l'ensemble de la poudre est à mener afin de bien définir ces distributions élémentaires.

Dans ce cas de répartition granulométrique bimodale, avantageusement, la poudre 60 comporte une première distribution de particules de petite taille (courbe 101) dont la taille moyenne est centrée autour d'une première valeur de diamètre moyen d_{50%-1} et une deuxième distribution de particules de grande taille (courbe 102) dont la taille moyenne est centrée autour d'une deuxième valeur de diamètre moyen d_{50%-2} qui est sensiblement sept fois plus importante que ladite première valeur de diamètre moyen d_{50%-1}. De préférence, la première distribution de particules représente sensiblement 27% en masse de la poudre (la deuxième distribution de particules représentant alors la balance, à savoir sensiblement 73% en masse de la poudre).

Une telle répartition bi-modale avec un rapport de taille de sept entre la première valeur de diamètre moyen d_{50%-1} et la deuxième valeur de diamètre moyen d_{50%-2} (d_{50%-1}/d_{50%-2}= ou ≅ 1/7) engendre une porosité minimale et une densité relative maximale du lit de poudre, pour autant que ces deux répartitions granulométriques soient parfaitement bien mélangées ensemble (à sec ou par voie humide) de façon à obtenir un mélange bien homogène. Le mélange à sec peut se faire par diffusion (tambour rotatif), par convection (vis rotative) ou par cisaillement (ailette ou pale rotative).

Cette densité relative maximale du lit de poudre se situe entre la densité relative versée (ou apparente) et la densité relative vibrée (ou tassée) correspondant respectivement au rapport entre la densité versée (ou apparente) et la densité théorique et au rapport entre la densité vibrée (ou tassée) et la densité théorique. La densité versée correspond à la densité apparente d'une poudre versée en vrac dans un récipient de volume adapté et connu et donc non compactée autrement que sous son propre poids. Par contre, la densité vibrée correspond à la densité apparente de la poudre du précédent récipient tassée sur un plateau vibrant sans autre pression appliquée. Soulignons que les densités tassées et versées des poudres sont généralement déterminées à l'aide d'un appareil nommé « *Hall flowmeter»* suivant la norme ASTM-B527-93(2000).

Plus précisément, dans le cas idéal où les particules sont des sphères iso-dimensionnelles avec un rapport de taille moyenne de 1/7, et où la première distribution de particules représente 27% en masse, les calculs permettent de montrer que l'on obtient une densité relative optimale de 0,86 (contre 0,74 pour une répartition granulométrique monomodale correspondant à un empilement régulier de type cubique à faces centrées ou hexagonal compact de coordinence 12) et une porosité de 14% (contre 26% pour une répartition granulométrique monomodale). Rappelons que la compacité d'un empilement aléatoire compact de particules monodisperses et sphériques (ou « *Random Close Packing »,* RCP) est voisin de 0,64 (pour un diamètre de sphère important), proche de la densité relative versée d'une telle poudre.

Par exemple, on utilise de la poudre avec une répartition bi-modale, dans laquelle la première valeur de diamètre moyen d_{50%-1} est de 3,5 µm pour un d_{10%-1} et un d_{90%-1} respectivement de 2,2 et 10 µm et la deuxième valeur de diamètre moyen d_{50%-2} est environ sept fois plus importante soit un d_{50%-2} de 24,5 µm pour un d_{10%-2} et un d_{90%-2} respectivement de 15 et 50 µm.

La première distribution granulométrique présente des tailles de particules qui de préférence ne doivent pas être en dessous de 1 µm et au dessus de 15 µm.

Quant à la seconde distribution, les tailles de particules ne doivent pas être de préférence en dessous de 10 µm et au dessus de 53 µm.

Par exemple, ces deux distributions peuvent être déduites d'un tri sélectif granulométrique par tamisage pour les plus grosses particules (≥38 µm ou ≤ 400 mesh) et par élutriation pour les plus petites particules (<38 µm) dans un courant d'air, d'azote ou d'argon.

Ces deux distributions peuvent en effet être déduites d'une distribution bien plus large (par exemple une taille de particules d comprise entre 1 et 150 µm), ce qui conduira nécessairement à une quantité de poudre inexploitable qu'il faudra valoriser.

Selon une autre disposition préférentielle, mais toutefois beaucoup plus onéreuse, la poudre comporte une répartition granulométrique tri-modale.

Dans ce cas, avantageusement, la poudre 60 comporte une première distribution de particules de petite taille dont la taille moyenne est centrée autour d'une première valeur de diamètre moyen, une deuxième distribution de particules de taille moyenne dont la taille moyenne est centrée autour d'une deuxième valeur de diamètre moyen qui est sensiblement sept fois plus importante que ladite première valeur de diamètre moyen et une troisième distribution de particules de grande taille dont la taille moyenne est centrée autour d'une troisième valeur de diamètre moyen qui est sensiblement quarante-neuf fois plus importante que ladite première valeur de diamètre moyen. De préférence, la première distribution de particules représente sensiblement 11% en masse de la poudre et la deuxième distribution de particules représente sensiblement 14% en masse de la poudre (la troisième distribution de particules représentant alors la balance, à savoir sensiblement 75% en masse de la poudre).

Une telle répartition tri-modale avec un rapport de taille de sept entre la deuxième valeur de diamètre moyen et la première valeur de diamètre moyen et un rapport de taille de quarante-neuf entre la troisième valeur de diamètre moyen et la première valeur de diamètre moyen engendre une porosité minimale et une densité relative maximale du lit de poudre laquelle se situe entre la densité relative versée et la densité relative vibrée (ou tassée).

Plus précisément, dans le cas idéal où les particules sont des sphères iso-dimensionnelles avec des rapports de taille moyenne de 1/7 entre la première et la deuxième distribution et de 1/49 entre la première et la troisième distribution, les calculs permettent de montrer que l'on obtient une densité relative optimale de 0,95 (contre 0,74 pour une répartition granulométrique monomodale) et une porosité de 5% (contre 26% pour une répartition granulométrique monomodale).

Par exemple, on utilise de la poudre avec une répartition tri-modale, dans laquelle la première valeur de diamètre moyen d_{50%-1} est de 0,50 µm pour un d_{10%-1} et un d_{90%-1} respectivement de 0,25 et 1,5 µm, la deuxième valeur de diamètre moyen d_{50%-2} est environ sept fois plus importante soit un d_{50%-2} de 3,5 µm pour un d_{10%-2} et un d_{90%-2} respectivement de 2,2 et 10 µm et la troisième valeur de diamètre moyen d_{50%-3} est environ quarante-neuf fois plus importante que la première valeur de diamètre moyen soit un d_{50%-3} de 24,5 µm pour un d_{10%-3} et un d_{90%-3} respectivement de 15 et 50 µm. La première distribution granulométrique présente des tailles de particules qui de préférence ne doivent pas être en dessous de 0,1 µm et au dessus de 2,5 µm. La deuxième distribution granulométrique présente des tailles de particules qui de préférence ne doivent pas être en dessous de 1 µm et au dessus de 15 µm. Quant à la troisième distribution, les tailles de particules ne doivent pas être de préférence en dessous de 10 µm et au dessus de 53 µm.

S'agissant de la composition de la poudre, et de la répartition de composition entre les particules, voire au sein de chaque particule, de nombreuses configurations sont possibles.

Selon une disposition possible, toutes les particules de la poudre présentent une composition identique et homogène.

Par exemple, il est également possible d'utiliser, avantageusement, une poudre 60 qui est en toute ou partie une poudre pré-alliée issue d'un procédé de synthèse de poudre à partir d'un unique alliage mère.

L'obtention d'une telle poudre pré-alliée est bien connue de l'homme du métier, notamment par atomisation gazeuse d'un liquide présentant la composition souhaitée pour la poudre (mélange mère), et formant des gouttelettes se solidifiant en formant ainsi les particules de poudre.

On peut utiliser une poudre 60 qui est toute ou en partie une poudre enrobée, c'est-à-dire une poudre dont les particules présentent une composition différente à cœur et au niveau de l'enveloppe située autour du cœur.

On peut encore envisager une poudre pré-alliée de type agglomérée, qui est obtenue à partir d'une agglomération d'un mélange d'une poudre métallique (matrice) et d'une poudre céramique (renfort) avec un liant aqueux additionné d'un agglomérant de type alcool polyvinylique ou de type cellulose ou encore de type glycol polyéthylène puis consolidé thermiquement et éventuellement sphéroïdisé

On peut également utiliser une poudre 60 dont la première distribution de particules et la deuxième distribution de particules présentent une composition chimique différente entre elles.

On peut tout aussi imaginer que la première distribution de particules est déjà constituée d'un mélange de deux poudres de composition chimique différente, tout comme éventuellement la deuxième distribution de particules.

De préférence, ledit matériau formé de particules de ladite poudre est métallique ou intermétallique ou céramique ou polymère.

Avantageusement, ledit matériau formé de particules de ladite poudre est métallique et appartient au groupe comprenant les alliages à base de fer, les alliages à base de titane, les alliages à base de cobalt, les alliages à base de cuivre, les alliages à base de magnésium, les alliages à base d'aluminium, les alliages à base de molybdène, les alliages à base de tungstène, les alliages à base de zirconium, les alliages à base d'argent, les alliages à base de tantale, les alliages à base de zinc, les alliages à base d'or, les alliages à base de niobium, les alliages à base de platine et les superalliages à base de nickel.

Selon une autre disposition préférentielle, ledit matériau est métallique et il est formé de ladite poudre qui appartient au groupe comprenant le TA6V et l'Inconel 718 (Marque déposée).

On entend par alliage TA6V, l'alliage de titane largement connu et utilisé qui comporte 6% massique d'aluminium et 4% massique de vanadium.

On entend par alliage Inconel 718 (Marque déposée), l'alliage à base de nickel présentant la composition suivante :

| Elément (% massique) | | | | | | | | | | | | | | |
|---|---|---|---|---|---|---|---|---|---|---|---|---|---|---|
| Ni | Cr | Fe | Mo | Nb | Co | Mn | Cu | AI | Ti | Si | C | S | P | B |
| 50,0-55,0 | 17,0-21,0 | Balance à 100 % | 2,80-3,30 | 4,75-5,50 | 1,0 max | 0,35 max | 0,30 max | 0,20-0,80 | 0,65-1,15 | 0,35 max | 0,08 max | 0,015 max | 0,015 max | 0,006 max |

Pour la mise en oeuvre du procédé, rien n'est changé par rapport à la description qui précède du procédé de l'art antérieur, hormis la répartition granulométrique multimodale de la poudre 60.

Ainsi, dans l'exemple de la composition unique de la poudre, par exemple de l'alliage Inconel 718 (Marque déposée), on peut partir d'un lot de poudre présentant une courbe 100 de distribution granulométrique monomodale, soumise à un tri sélectif pour retenir parmi toutes ces particules de départ deux (ou plus) sous-groupes de particules de poudre dont la taille est centrée respectivement sur une première valeur de diamètre moyen (première distribution de particules de petite taille centrée autour du diamètre médian d_{50%-1}) et sur une deuxième valeur de diamètre moyen (deuxième distribution de particules de grande taille centrée autour du diamètre médian d_{50%-2}), et ce comme sur les figure 7 et 8.

Ensuite, on mélange ces deux sous-groupes de particules de poudre suivant un rapport massique bien défini, de façon à avoir un mélange homogène.

Par la suite, on transvase une partie de la poudre 60 depuis le bac d'alimentation 70 sur le support de construction 80 et on l'y étale de façon à former une première couche 10 de poudre grâce au système de dépose 30.

On porte ensuite une région de cette première couche 10 de poudre, par balayage avec le faisceau de haute énergie 95, à une température supérieure à la température de fusion (ou de frittage) de cette poudre, de telle sorte que les particules de poudre de cette région de la première couche 10 sont fondues (ou frittées) et forment un premier élément 15 d'un seul tenant, qui est une partie de la pièce que l'on construit.

Avantageusement, ledit faisceau de haute énergie 95 est un faisceau laser.

Avantageusement, on ne chauffe pas les particules de poudre 60 avec le faisceau laser 95 à une température très supérieure à la température de fusion T_{F} du matériau constituant la poudre, de façon à éviter le dégagement de fumées par vaporisation et que les particules de poudre 60 les plus fines, non fondues et en intime contact avec la pièce en construction ne se soudent entre elles.

Par exemple on ne chauffe pas les particules de poudre constitutives du bain liquide au dessus de son point d'ébullition T_{évap}. Dans le cas d'un mélange de deux poudres de composition chimique différente, il conviendra de ne pas chauffer les particules du mélange au dessus du plus bas point d'évaporation.

Les couches supérieures de cette pièce sont ensuite construites successivement comme décrit plus haut.

Lorsque l'on utilise, à titre de support de construction 80, non pas une grille support mais un support de construction 80 massif ou une partie d'une autre pièce, ce dernier peut également être préchauffé à une température Ts (température du substrat) afin de relaxer quelque peu les contraintes résiduelles dans le bas de la pièce en construction. Aussi, pour les mêmes raisons que celles citées ci-avant, il convient de ne pas préchauffer ledit support de construction 80 au-dessus de T_{F}/2 voire mieux au-dessus de T_{F}/3.

Avantageusement on utilise des particules de poudre 60 qui sont libres de gaz occlus et exemptes de particules étrangères. Ainsi la pièce finie est moins susceptible de comporter des défauts tels que des porosités et des inclusions ou précipités intermétalliques.

Avant de déposer la poudre sur le support de construction 80, on préchauffe au préalable la poudre pendant un temps suffisant (par exemple 0,5 à 3h selon la masse de poudre) à une température de préchauffage Tₚ comprise entre 80°C et 150°C, par exemple en chauffant le bac d'alimentation de poudre 70. Cette température de préchauffage T_{P} est bien inférieure à la température de fusion T_{F}.

De plus, on fait circuler du gaz neutre pour le matériau considéré, par exemple de l'argon, autour des particules de poudre 60 dans le bac d'alimentation (comparable à ce qui se passe au sein d'un lit fluidisé). Cette circulation de gaz neutre est de préférence ascendante.

Ainsi, on diminue voire on élimine l'humidité de l'air adsorbée à la surface des particules de poudre 60.

En conséquence, d'une part, on facilite ainsi l'étalement de la poudre sur le support de construction 80 car les particules de poudre 60 sont moins susceptibles de s'agglomérer.

D'autre part, on évite la formation d'oxyde(s) et le dégagement d'hydrogène causés par une possible réaction de la vapeur d'eau avec le liquide du matériau de la poudre (par exemple pour les alliages d'aluminium on a : 2 Al_{liquide} + 3 H₂Oᵥₐₚₑᵤᵣ→ Al₂O_{3solide} + 3 H_{2gaz}), et par conséquent on minimise la formation de défauts de fabrication de la pièce.

La température de préchauffage Tₚ est comprise entre 80 et 150 °C.

Dans le cadre de la présente invention, il est possible, selon une variante, de générer et d'utiliser simultanément et en parallèle plusieurs faisceaux de haute énergie, et ce afin de mettre en œuvre le procédé de fabrication en construisant simultanément plusieurs régions de la pièce situées dans le même plan, ce qui permet une économie de temps de fabrication, ou bien afin d'étendre la région de chauffage de la poudre de chaque nouvelle couche dans des conditions satisfaisantes de température pour obtenir la fusion ou le frittage de la poudre de cette région, et ce afin de permettre la fabrication d'une pièce de plus grande dimension.

De façon préférentielle, et afin de favoriser le réarrangement géométrique et spatial entre les particules du lit de poudre, et ce afin d'en assurer la compacité la plus grande, on met en œuvre, entre les étapes (b) et (c), ainsi qu'entre les étapes (d) et (e), une étape supplémentaire selon laquelle on soumet le support de construction 80 et/ou le bac de construction 85 à des vibrations ultrasonores, et ce notamment au moyen d'un système de sonotrodes (non représenté) qui peut être directement en contact avec le support de construction 80 ou bien indirectement en contact avec le support de construction 80 (par exemple du fait d'un contact direct avec le bac de construction 85).

## Revendications

1. Procédé de fabrication d'une pièce par fusion sélective ou frittage sélectif de lits de poudre par faisceau de haute énergie qui comprend les étapes suivantes:
(a) On fournit un matériau sous forme de particules de poudre (60),
(b) On dépose une première couche (10) de poudre dudit matériau sur un support de construction (80),
(c) On balaye au moins une région de ladite première couche (10) avec ce faisceau (95) de façon à chauffer localement la poudre de ladite région à une température supérieure à la température de frittage de cette poudre, de telle sorte que les particules de ladite poudre ainsi fondue ou frittée provenant de ladite région forment alors au moins un premier élément d'un seul tenant (15),
(d) On dépose une deuxième couche (20) de poudre dudit matériau sur ladite première couche de poudre (10),
(e) On balaye au moins une région de ladite deuxième couche (20) par le faisceau (95) de façon à chauffer la poudre de cette région à une température supérieure à la température de frittage de cette poudre, de telle sorte que les particules de la poudre ainsi frittée ou fondue forment au moins un deuxième élément d'un seul tenant (25),
(f) On répète les étapes (d) et (e) pour chaque nouvelle couche de poudre à déposer au dessus d'une couche précédente, et ce jusqu'à la formation complète de la pièce,
ledit procédé étant **caractérisé en ce que** la poudre comporte une répartition granulométrique multimodale et **en ce que**, entre les étapes (a) et (b), on préchauffe en continu ladite poudre à une température de préchauffage Tₚ comprise entre 80 °C et 150 °C et on fait circuler un gaz neutre dans ladite poudre de façon à diminuer l'humidité de l'air adsorbée à la surface des particules de poudre (60).

2. Procédé de fabrication selon la revendication 1, **caractérisé en ce que** la poudre comporte une répartition granulométrique bimodale.

3. Procédé de fabrication selon la revendication 2, **caractérisé en ce que** la poudre comporte une première distribution de particules de petite taille dont la taille moyenne est centrée autour d'une première valeur de diamètre moyen et une deuxième distribution de particules de grande taille dont la taille moyenne est centrée autour d'une deuxième valeur de diamètre moyen qui est sensiblement sept fois plus importante que ladite première valeur de diamètre moyen et **en ce que** la première distribution de particules représente sensiblement 27% en masse de la poudre.

4. Procédé de fabrication selon la revendication 1, **caractérisé en ce que** la poudre comporte une répartition granulométrique tri-modale.

5. Procédé de fabrication selon la revendication 4, **caractérisé en ce que** la poudre comporte une première distribution de particules de petite taille dont la taille moyenne est centrée autour d'une première valeur de diamètre moyen, une deuxième distribution de particules de taille moyenne dont la taille moyenne est centrée autour d'une deuxième valeur de diamètre moyen qui est sensiblement sept fois plus importante que ladite première valeur de diamètre moyen et une troisième distribution de particules de grande taille dont la taille moyenne est centrée autour d'une troisième valeur de diamètre moyen qui est sensiblement quarante-neuf fois plus importante que ladite première valeur de diamètre moyen, **en ce que** la première distribution de particules représente sensiblement 11% en masse de la poudre et **en ce que** la deuxième distribution de particules représente sensiblement 14% en masse de la poudre.

6. Procédé de fabrication selon l'une quelconque des revendications 1 à 5, **caractérisé en ce que** toutes les particules de la poudre présentent une composition identique et homogène.

7. Procédé de fabrication selon l'une quelconque des revendications 1 à 6, **caractérisé en ce que** la poudre est une poudre pré-alliée issue d'un procédé de synthèse de poudre à partir d'un unique alliage mère.

8. Procédé de fabrication selon l'une quelconque des revendications 1 à 7, **caractérisé en ce que** la poudre est toute ou en partie une poudre enrobée.

9. Procédé de fabrication selon l'une quelconque des revendications 3 et 5, **caractérisé en ce que** la première distribution de particules et la deuxième distribution de particules présentent une composition chimique différente entre elles.

10. Procédé de fabrication selon l'une quelconque des revendications 3 et 5, **caractérisé en ce que** la première distribution de particules est constituée d'un mélange de deux poudres de composition chimique différente.

11. Procédé de fabrication selon l'une quelconque des revendications 1 à 10, **caractérisé en ce que** ledit matériau formé de particules de ladite poudre est métallique ou intermétallique ou céramique ou polymère.

12. Procédé de fabrication selon la revendication précédente, **caractérisé en ce que** ledit matériau formé de particules de ladite poudre est métallique et appartient au groupe comprenant les alliages à base de fer, les alliages à base de titane, les alliages à base de cobalt, les alliages à base de cuivre, les alliages à base de magnésium, les alliages à base d'aluminium, les alliages à base de molybdène, les alliages à base de tungstène, les alliages à base de zirconium, les alliages à base d'argent, les alliages à base de tantale, les alliages à base de zinc, les alliages à base d'or, les alliages à base de niobium, les alliages à base de platine et les superalliages à base de nickel.

13. Procédé de fabrication selon la revendication précédente, **caractérisé en ce que** ledit matériau métallique formé de ladite poudre appartient au groupe comprenant le TA6V et l'Inconel 718 (Marque déposée).

14. Procédé de fabrication selon l'une quelconque des revendications 1 à 13, **caractérisé en ce que**, entre les étapes (b) et (c), ainsi qu'entre les étapes (d) et (e), on soumet le support de construction (80) à des vibrations ultrasonores.

## Patentansprüche

1. Verfahren zur Herstellung eines Bauteils durch selektives Schmelzen oder selektives Sintern von Pulverbetten mittels eines Hochenergiestrahls, das die folgenden Schritte umfasst:
(a) Bereitstellen eines Materials in Form von Pulverpartikeln (60),
(b) Aufbringen einer ersten Schicht (10) aus Pulver des Materials auf einem Bauträger (80),
(c) Abtasten mindestens einer Region der ersten Schicht (10) mit diesem Strahl (95), derart dass das Pulver der Region lokal auf eine Temperatur erhitzt wird, die höher als die Sintertemperatur dieses Pulvers ist, derart dass die Partikel des so geschmolzenen oder gesinterten Pulvers, die von der Region stammen, dann mindestens ein erstes Element (15) in einem Stück bilden,
(d) Aufbringen einer zweiten Schicht (20) aus Pulver des Materials auf der ersten Pulverschicht (10),
(e) Abtasten mindestens einer Region der zweiten Schicht (20) durch den Strahl (95), derart dass das Pulver dieser Region auf eine Temperatur erhitzt wird, die höher als die Sintertemperatur dieses Pulvers ist, derart dass die Partikel des so gesinterten oder geschmolzenen Pulvers mindestens ein zweites Element (25) in einem Stück bilden,
(f) Wiederholen der Schritte (d) und (e) für jede neue Pulverschicht, die über einer vorhergehenden Schicht aufzubringen ist, und dies bis zur vollständigen Bildung des Teils,
wobei das Verfahren **dadurch gekennzeichnet ist, dass** das Pulver eine multimodale Korngrößenverteilung umfasst, und dass zwischen den Schritten (a) und (b) das Pulver kontinuierlich auf eine Vorerhitzungstemperatur Tₚ von zwischen 80 °C und 150 °C erhitzt wird und ein Neutralgas in dem Pulver in Umlauf gebracht wird, derart dass die Feuchtigkeit der an der Oberfläche der Pulverpartikel (60) adsorbierten Luft vermindert wird.

2. Herstellungsverfahren nach Anspruch 1, **dadurch gekennzeichnet, dass** das Pulver eine bimodale Korngrößenverteilung umfasst.

3. Herstellungsverfahren nach Anspruch 2, **dadurch gekennzeichnet, dass** das Pulver eine erste Verteilung von Partikeln mit geringer Größe, deren mittlere Größe um einen ersten mittleren Durchmesserwert zentriert ist, und eine zweite Verteilung von Partikeln mit großer Größe umfasst, deren mittlere Größe um einen zweiten mittleren Durchmesserwert zentriert ist, der im Wesentlichen sieben Mal Größer als der erste mittlere Durchmesserwert ist, und dadurch, dass die erste Partikelverteilung im Wesentlichen 27 Ma% des Pulvers darstellt.

4. Herstellungsverfahren nach Anspruch 1, **dadurch gekennzeichnet, dass** das Pulver eine trimodale Korngrößenverteilung umfasst.

5. Herstellungsverfahren nach Anspruch 4, **dadurch gekennzeichnet, dass** das Pulver eine erste Verteilung von Partikeln mit geringer Größe, deren mittlere Größe um einen ersten mittleren Durchmesserwert zentriert ist, eine zweite Verteilung von Partikeln mit mittlerer Größe, deren mittlere Größe um einen zweiten mittleren Durchmesserwert zentriert ist, der im Wesentlichen sieben Mal größer als der erste mittlere Durchmesserwert ist, und eine dritte Verteilung von Partikeln mit großer Größe umfasst, deren mittlere Größe um einen dritten mittleren Durchmesserwert zentriert ist, der im Wesentlichen neunundvierzig Mal größer als der erste mittlere Durchmesserwert ist, dadurch, dass die erste Partikelverteilung im Wesentlichen 11 Ma% des Pulvers darstellt, und dadurch, dass die zweite Partikelverteilung im Wesentlichen 14 Ma% des Pulvers darstellt.

6. Herstellungsverfahren nach einem der Ansprüche 1 bis 5, **dadurch gekennzeichnet, dass** sämtliche Partikel des Pulvers eine identische und homogene Zusammensetzung aufweisen.

7. Herstellungsverfahren nach einem der Ansprüche 1 bis 6, **dadurch gekennzeichnet, dass** das Pulver ein vorlegiertes Pulver ist, das aus einem Pulversyntheseverfahren ausgehend von einer einzigen Vorlegierung stammt.

8. Herstellungsverfahren nach einem der Ansprüche 1 bis 7, **dadurch gekennzeichnet, dass** das Pulver vollständig oder teilweise ein umhülltes Pulver ist.

9. Herstellungsverfahren nach einem der Ansprüche 3 bis 5, **dadurch gekennzeichnet, dass** die erste Partikelverteilung und die zweite Partikelverteilung eine voneinander unterschiedliche chemische Zusammensetzung aufweisen.

10. Herstellungsverfahren nach einem der Ansprüche 3 bis 5, **dadurch gekennzeichnet, dass** die erste Partikelverteilung aus einem Gemisch von zwei Pulvern mit unterschiedlichen chemischen Zusammensetzungen besteht.

11. Herstellungsverfahren nach einem der Ansprüche 1 bis 10, **dadurch gekennzeichnet, dass** das Material, das aus Partikeln des Pulvers gebildet ist, metallisch oder intermetallisch oder keramisch oder polymer ist.

12. Herstellungsverfahren nach dem vorhergehenden Anspruch, **dadurch gekennzeichnet, dass** das Material, das aus Partikeln des Pulvers gebildet ist, metallisch ist und zu der Gruppe gehört, die Legierungen auf Eisenbasis, Legierungen auf Titanbasis, Legierungen auf Kobaltbasis, Legierungen auf Kupferbasis, Legierungen auf Magnesiumbasis, Legierungen auf Aluminiumbasis, Legierungen auf Molybdänbasis, Legierungen auf Wolframbasis, Legierungen auf Zirkoniumbasis, Legierungen auf Silberbasis, Legierungen auf Tantalbasis, Legierungen auf Zinkbasis, Legierungen auf Goldbasis, Legierungen auf Niobbasis, Legierungen auf Platinbasis und Superlegierungen auf Nickelbasis umfasst.

13. Herstellungsverfahren nach dem vorhergehenden Anspruch, **dadurch gekennzeichnet, dass** das metallische Material, das aus dem Pulver gebildet ist, zu der Gruppe gehört, die TA6V und Inconel 718 (eingetragenes Warenzeichen) umfasst.

14. Herstellungsverfahren nach einem der Ansprüche 1 bis 13, **dadurch gekennzeichnet, dass** der Konstruktionsträger (80) zwischen den Schritten (b) und (c) sowie zwischen den Schritten (d) und (e) Ultraschallschwingungen ausgesetzt wird.

## Claims

1. A fabrication method for fabricating a part by selective melting or selective sintering of powder beds by high energy beam, the method comprising the following steps:
a) providing a material in the form of powder particles (60);
b) depositing a first powder layer (10) of said material on a build support (80);
c) scanning at least one region of said first layer (10) with the beam (95) so as to heat the powder of said region locally to a temperature higher than the sintering temperature of the powder, such that the particles of said powder as melted or sintered in this way in said region form at least a first single-piece element (15);
d) laying a second powder layer (20) of said material on said first powder layer (10);
e) scanning at least one region of said second layer (20) with the beam (95) so as to heat the powder of this region to a temperature higher than the sintering temperature of the powder, so that the particles of powder as sintered or melted in this way form at least one second single-piece element (25); and
f) repeating steps d) and e) for each new powder layer to be laid over a preceding layer until the part has been completely formed;
said method being **characterized in that** the powder comprises a grain size distribution that is multimodal and **in that**, between steps a) and b), said powder is continuously preheated to a preheat temperature Tₚ lying in the range 80°C to 150°C and an inert gas is caused to flow through said powder so as to diminish the air humidity adsorbed on the surface of the powder particles (60) .

2. A fabrication method according to claim 1, **characterized in that** the powder has a grain size distribution that is bimodal.

3. A fabrication method according to claim 2, **characterized in that** the powder has a first distribution of particles of small size having mean size centered around a first mean diameter value and a second distribution of particles of large size having mean size centered around a second mean diameter value that is substantially seven times greater than said first mean diameter value, and **in that** the first particle distribution represents substantially 27% by weight of the powder.

4. A fabrication method according to claim 1, **characterized in that** the powder has a grain size distribution that is trimodal.

5. A fabrication method according to claim 4, **characterized in that** the powder has a first distribution of particles of small size with mean size centered around a first mean diameter value, a second distribution of particles of medium size with mean size centered around a second mean diameter value that is substantially seven times greater than said first mean diameter value, and a third distribution of particles of large size of mean size that is centered around a third mean diameter value that is substantially forty-nine times greater than said first mean diameter value, **in that** the first distribution of particles represents substantially 11% by weight of the powder, and **in that** the second distribution of particles represents substantially 14% by weight of the powder.

6. A fabrication method according to any one of claims 1 to 5, **characterized in that** all of the particles of the powder present identical and homogeneous composition.

7. A fabrication method according to any one of claims 1 to 6, **characterized in that** the powder is a pre-alloyed powder obtained by a method of synthesizing powder from a single parent alloy.

8. A fabrication method according to any one of claims 1 to 7, **characterized in that** the powder is in full or in part a coated powder.

9. A fabrication method according to claim 3 or claim 5, **characterized in that** the first particle distribution and the second particle distribution present mutually different chemical compositions.

10. A fabrication method according to claim 3 or claim 5, **characterized in that** the first particle distribution is constituted by a mixture of two powders of different chemical compositions.

11. A fabrication method according to any one of claims 1 to 10, **characterized in that** said material made up of particles of said powder is metallic, or intermetallic, or ceramic, or polymeric.

12. A fabrication method according to the preceding claim, **characterized in that** said material made up of particles of said powder is metallic and belongs to the group comprising alloys based on iron, alloys based on titanium, alloys based on cobalt, alloys based on copper, alloys based on magnesium, alloys based on aluminum, alloys based on molybdenum, alloys based on tungsten, alloys based on zirconium, alloys based on silver, alloys based on tantalum, alloys based on zinc, alloys based on gold, alloys based on niobium, alloys based on platinum, and superalloys based on nickel.

13. A fabrication method according to the preceding claim, **characterized in that** said metallic material made up of said powder belongs to the group comprising TAV6 and Inconel 718 (registered trademark).

14. A fabrication method according to any one of claims 1 to 13, **characterized in that** between steps b) and c), and between steps d) and e), the build support (80) is subjected to ultrasound vibration.
